# EUROPEAN PATENT APPLICATION

(11) **EP 0 987 526 A2**
(43) Date of publication of application: **22.03.2000**
(21) Application number: 99117865.8
(22) Date of filing: 10.09.1999
(51) Int. Cl.: G01F 15/00

(54) **Adaptable gas meter**

(30) Priority: 19.09.1998 GB 9820335
(71) Applicant: Siemens Metering Limited, Oldbury, Bracknell, Berkshire, RG12 8FZ (GB)
(72) Inventor: Taylor, Robert E. J, Cheshire, SK7 3LJ (GB)
(74) Representative: Kay, Ross Marcel (GB)

(57) **Abstract**

A gas meter system 30 comprising at least one gas measuring means 31a, 31b, is disposed within a box 6. The box 6 has an inlet 2 and an outlet 4 and is divided into an inlet chamber 34 and an outlet chamber 35 by a dividing plate 33 to which the gas measuring means 31a, 31b is fixed, and is arranged in a manner so as to allow the gas measuring means to measure gas flow for a plurality of gas pipe configurations and with the plurality of gas pipe fitting requirements. The present invention offers the technical advantage of allowing a single type of gas meter to be used in a variety of configurations and with a variety of gas pipe fittings as found in different countries. Furthermore the present invention allows for a large volume of gas in the inlet chamber, thus reducing the gas flow rate within the gas meter. This provides the technical advantage of increasing the amount of dust which settles out of the gas in the inlet chamber and which can adversely effect the accuracy of current gas meters.

## Description

The present invention relates to the field of gas meters. More specifically, the present invention relates to an adaptable case for gas meters.

To date both domestic an industrial gas meters have varied in size and gas pipe connection requirements depending on the country in which they are to be used.

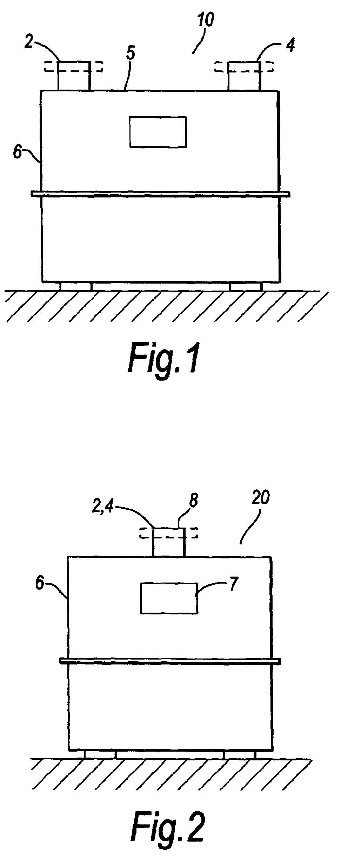

Currently in the UK gas measuring devices are arranged in a configuration 10 as shown in Figure 1, with the gas inlet 2 and gas outlet 4 disposed on top 5 of the box 6 with the gas meter inside the box connected to either the inlet or outlet. In other countries, as shown in Figure 2, a concentric arrangement 20 is used with the gas inlet 2 and gas outlet 4 arranged concentrically at a single location 8 on the box 6 again with remaining system connected to the inlet or outlet. An electronic module 7 is disposed on the front of the box 6. The gas measuring devices themselves vary considerably in size, thus the size of the box to contain them needs to vary from country to country. Furthermore the fittings which connect the gas pipes to the box vary. There are currently over thirty variations of bosses used in the European Union to connect gas pipes to gas measuring systems for various meter sizes (rating).

Thus to date it has not been possible to manufacture a single gas measuring system which can be sold in several countries, that covers several meter rating sizes.

Recent improvements in gas meter technology, as shown in International patent applications WO 91/09279, WO 91/09280 and WO 91/09281 has resulted in a significant reduction in the physical size of domestic gas meters. Thus the possibility of using a single gas meter to measure gas in a variety of countries with different gas pipe configuration and gas pipe fining requirement is solved according to the present invention.

According to the present invention there is provided apparatus for measuring gas flow comprising at least one gas measuring means, and a box, wherein said at least one gas measuring means is disposed within said box and wherein said box has a gas inlet means and a gas outlet means and is divided into an inlet chamber and an outlet chamber by a dividing plate to which said at least one gas measuring means to measure gas flow for a plurality of gas pipe configurations and with plurality of gas pipe fining requirements.

The present invention offers the technical advantage of allowing a single type of gas meter to be used in a variety of configurations and with a variety of gas pipe fittings as found in different countries. Furthermore the present invention allows for a large volume of gas in the inlet chamber, thus reducing the gas flow rate within the gas meter. This provided the technical advantage of increasing the amount of dust which settles out of the gas prior to filtration in the inlet chamber which may otherwise adversely affect the accuracy of current gas meters.

Furthermore the present invention allows for a reduced pressure differential between the inlet and outlet of the gas measuring means. As is well known in the art, relatively large pressure differentials can adversely affect the accuracy of the gas measuring means. Thus the present invention improves the accuracy of current gas measuring systems.

While the principal advantages and features of the invention have been described above a greater understanding and appreciation of the invention may be obtained by referring to the drawings in detailed description of the preferred embodiment, presented by way of example only, in which;
Figure 1 shows a current gas meter system with a conventional configuration for use in the UK,
Figure 2 shows a current gas meter system with a concentric configuration as used in Germany for example,
Figure 3 shows a gas meter system according to the first aspect of the present invention,
Figure 3a shows essentially the same gas measuring system as in figure 3, but with the top of the box removed,
Figure 4 shows a gas meter system according to a further aspect of the present invention,
Figure 5 shows a gas measuring system according to yet a further aspect of the present invention, and
Figure 6 shows a gas measuring system according to yet a further aspect of the present invention.

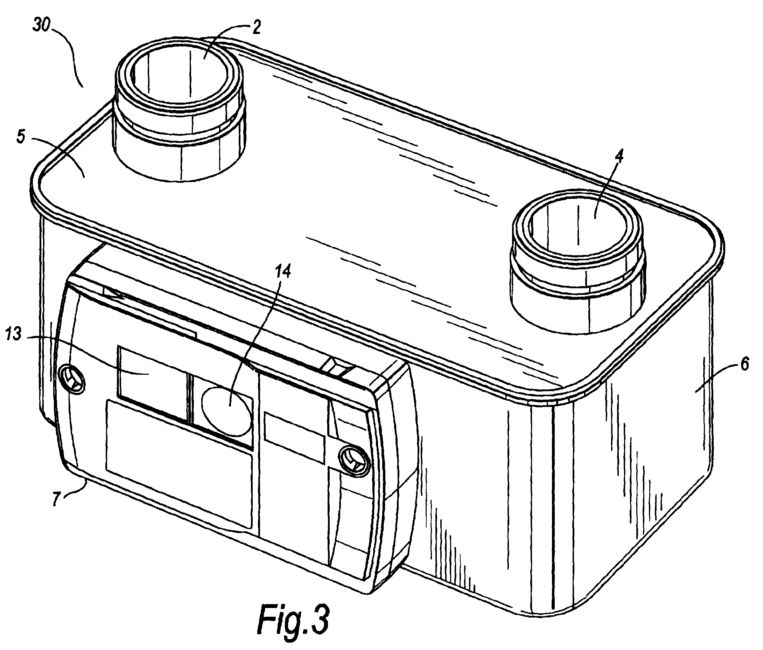

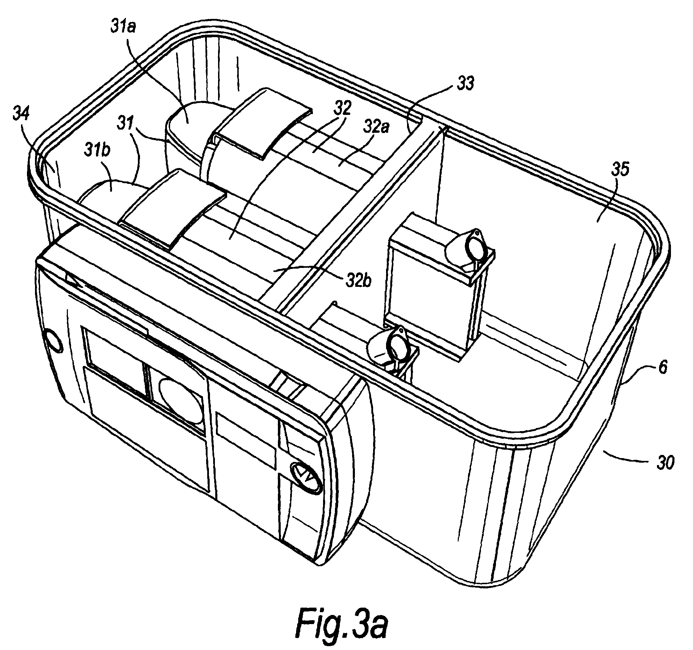

In Figure 3 a first embodiment 30 of the present invention is shown with the gas inlet means 2 and gas outlet means 4 arranged in a conventional style on the top 5 of box 6. An electronics module 7, which is well known in the art, is shown attached to the front of the box. The electronics module 7 comprises a display 13 and an opto port 14 for the purposes of displaying meter information and communication respectively. The gas measuring means is located inside box 6 and thus is not shown.

Figure 3a, in which parts also appearing in figure 3 bear identical numerical designation, shows essentially the same embodiment 30 as shown in Figure 3, but with top 5 of box 6 removed. A dividing wall 33 divides box 6 into two chambers; a gas inlet chamber 34 and a gas outlet chamber 35. At least one of gas measuring devices, 31a and 31b is disposed in the gas inlet chamber and are substantially attached, fixed or otherwise secured to dividing wall 33. A pair of gas filter devices 32a, 32b are disposed in the gas inlet chamber 34. The gas filter devices may be an integral part of the gas measuring device. The system as shown in figure 3 and 3a operates essentially as follows. Gas flows into gas meter system 30 via a gas inlet means 2 and enters gas inlet chamber 34. The gas enters the gas filter devices 32a, 32b then passes through the gas measuring devices 31a, 31b and on through the dividing wall 33 and into the gas outlet chamber 34 before leaving the system via gas outlet means 4.

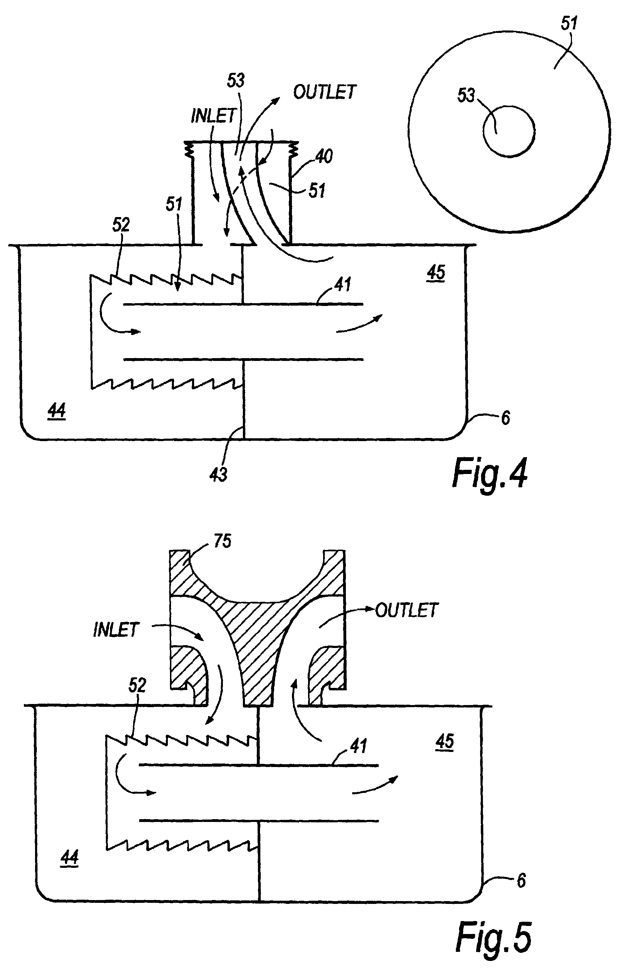

In Fig 4, a further embodiment of the present invention is shown in which a concentric gas inlet/outlet arrangement 40 is employed. A dividing wall 43 separates box 6 into two chambers, a gas inlet chamber 44 and a gas outlet chamber 45. Gas measuring devices, 41 are disposed on the dividing wall 43. Gas to be measured enters via the inlet side 51 of the concentric fitting 40 into the inlet chamber 44, flows through a filtration system 52, through the measuring device 41 and into the outlet chamber 45 and leaves the meter via the outlet side 53 of the concentric fitting.

As will be appreciated by those skilled in the art, the gas can enter the system by the inner opening of the concentric fining and leave via the outer opening, in which case the location of the inlet and outlet chambers are reversed.

The use of plurality of gas measuring devices allows for the same volume of gas to be measured and for the external gas flow rate to be maintained through each tube whilst increasing the maximum flow rate through the measuring system. Furthermore, with the use of the gas inlet and gas outlet chamber, pressure differential between the gas entering the gas measuring devices and the gas leaving the gas measuring devices is reduced compared to a single measuring device. As is well known in the art, gas measuring devices are adversely affected by large pressure differentials between their inlets and outlets.

In figure 5, a further embodiment of the present invention is shown in which an "inline" connection arrangement is shown. The functioning of the meter is as discussed with respect to Figure 4, except that the gas to be measured is guided into the inlet chamber 44 by the connection arrangement 75, designed to connect to inline pipework.

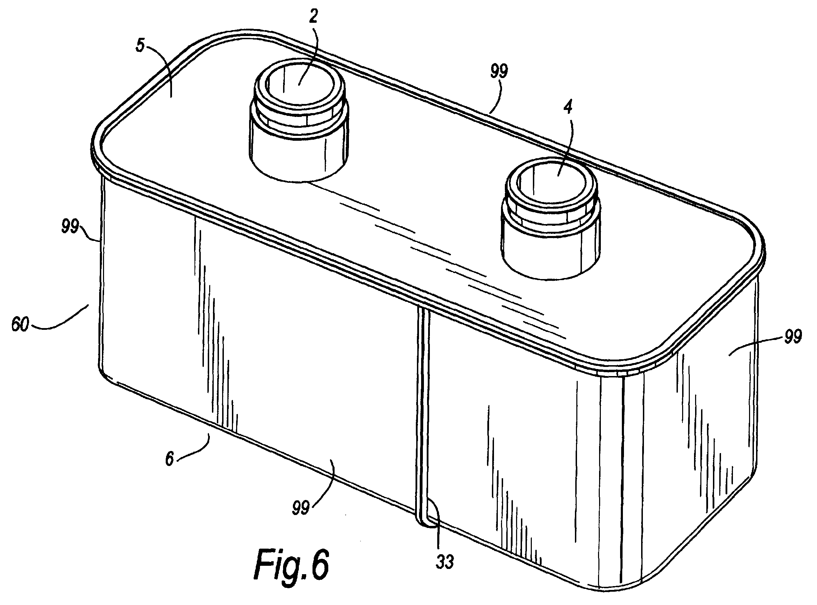

Figure 6 shows yet a further embodiment of the present invention 60 with the gas inlet means 2 and gas outlet mains 4 disposed more centrally on top 5 of box 6. As will be appreciated by those skilled in the art, to accommodate a variety of configurations and gas pipe fining types, the top 5 of box 6 will have to be altered accordingly. However the interior of the box can remain the same, with the location of the gas measuring devices and dividing wall remaining fixed.

As will be appreciated by those skilled in the art, various modifications may be made to the embodiment here and before described without departing from the scope of the present invention.

## Claims

1. Apparatus for measuring gas flow comprising at least one gas measuring means, and a box, wherein said at least one gas measuring means is disposed within said box and wherein said box has a gas inlet means and a gas outlet means and is divided into an inlet chamber and an outlet chamber by a dividing plate to which said at least one gas measuring means is fixed, and is arranged in a manner so as to allow said at least one gas measuring means to measure gas flow for a plurality of gas pipe configurations and with the plurality of gas pipe fining requirements.

2. Apparatus as claimed in Claim 1, wherein said gas inlet means and said gas outlet means are disposed in a spaced apart relationship on top of said box.

3. Apparatus as claimed in Claim 1, wherein said gas inlet means and said gas outlet means are disposed on opposite sides of said box.

4. Apparatus as claimed in Claim 3, wherein said gas inlet means and said gas outlet means are further arranged so as to lie along the same axis.

5. Apparatus as claimed in Claim 1, wherein said gas inlet and said gas outlet are disposed concentrically at one end of said box.

6. Apparatus as claimed in any preceding claims wherein said at least one gas measuring means comprises integral gas filter means.

7. Apparatus for measuring gas flow as hereinbefore described with reference to Figures 3 to 6 of the accompanying drawings.
